(19) Europäisches Patentamt
European Patent Office
Office européen des brevets

(11) **EP 3 359 928 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(51) Int Cl.:
*G01J 1/42* *(2006.01)*    *G01J 1/04* *(2006.01)*
*G02B 27/10* *(2006.01)*    *B23K 26/70* *(2014.01)*

(21) Anmeldenummer: **16785380.3**

(22) Anmeldetag: **05.10.2016**

(86) Internationale Anmeldenummer:
**PCT/EP2016/073785**

(87) Internationale Veröffentlichungsnummer:
**WO 2017/060296 (13.04.2017 Gazette 2017/15)**

(54) **VERFAHREN UND VORRICHTUNG ZUR STRAHLANALYSE**

METHOD AND DEVICE FOR BEAM ANALYSIS

PROCÉDÉ ET DISPOSITIF D'ANALYSE DE FAISCEAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.10.2015 DE 102015219330**

(43) Veröffentlichungstag der Anmeldung:
**15.08.2018 Patentblatt 2018/33**

(60) Teilanmeldung:
**20197125.6**

(73) Patentinhaber: **Carl Zeiss SMT GmbH**
**73447 Oberkochen (DE)**

(72) Erfinder:
• **MANGER, Matthias**
**73432 Aalen (DE)**
• **HUSEMANN, Christoph**
**07749 Jena (DE)**
• **KALISKY, Matus**
**73434 Aalen (DE)**
• **STOPPE, Lars**
**07743 Jena (DE)**

(74) Vertreter: **Frank, Hartmut**
**Bonsmann Bonsmann Frank**
**Patentanwälte**
**Reichspräsidentenstraße 21-25**
**45470 Mülheim a. d. Ruhr (DE)**

(56) Entgegenhaltungen:
WO-A1-2015/113713    US-A- 5 329 350
US-A1- 2009 185 132    US-A1- 2011 204 249
US-A1- 2011 249 256

EP 3 359 928 B1

**Beschreibung**

Die vorliegende Anmeldung beansprucht die Priorität der Deutschen Patentanmeldung DE 10 2015 219 330.6, angemeldet am 07. Oktober 2015.

HINTERGRUND DER ERFINDUNG

Gebiet der Erfindung

Die Erfindung betrifft ein Verfahren und eine Vorrichtung zur Strahlanalyse in einem optischen System. Die Erfindung ist insbesondere einsetzbar, um bei einem Laserstrahl über eine Analyse der geometrischen Strahlparameter (wie Lage und Kipp) hinaus auch Aufschluss über etwaige Wellenfrontabweichungen zu erlangen und diese ggf. in Echtzeit während des Betriebs des jeweiligen optischen Systems zu korrigieren.

Die Erfindung ist zur Analyse elektromagnetischer Strahlung geeignet, wie sie in Laserplasmaquellen bei einer EUV-Quelle einer mikrolithographischen Projektionsbelichtungsanlage eingesetzt wird. In weiteren Anwendungen ist die Erfindung auch allgemein dazu geeignet, elektromagnetische Strahlung, die zu beliebigen (insbesondere Mess- oder Diagnose-) Zwecken eingesetzt wird, zu analysieren.

Stand der Technik

Viele Laseranwendungen erfordern eine möglichst genaue Kenntnis von Strahlparametern wie z.B. der Strahlgröße, Strahldezentrierung, Strahlneigung oder Strahldivergenz) sowie auch die Korrektur von Aberrationen (wie z.B. Astigmatismus, Koma und sphärische Aberration).

Ein hierbei in der Praxis auftretendes Problem ist, dass z.B. thermisch induzierte Wellenfrontänderungen bzw. Aberrationen der Laserstrahlen auftreten können, deren möglichst exakte Kenntnis für eine im Betrieb (d.h. in Echtzeit) erfolgende Korrektur notwendig ist.

Der Einsatz von herkömmlicherweise zur Wellenfrontmessung gebräuchlichen Sensoren (wie z.B. sogenannten Shack-Hartmann-Sensoren mit einer in der Brennebene einer Mikrolinsenanordnung befindlichen CCD-Kamera) ist hier aber insoweit nur beschränkt geeignet, als aufgrund der durch die Messanordnung prinzipbedingt eingeführten geometrischen Bezugszentren (z.B. Scheitel bzw. Aperturen der Linsen in der Mikrolinsenanordnung bei einem Shack-Hartmann-Sensor) das jeweilige Messergebnis auch durch Effekte beeinflusst wird, welche auf der Wechselwirkung bzw. Scherung des Koordinatensystems der Laserstrahlung einerseits mit dem Koordinatensystem der Messanordnung andererseits beruhen (so dass quasi das der Messanordnung eigene intrinsische Koordinatensystem dem Messergebnis "aufgeprägt" wird). Dies hat insbesondere zur Folge, dass bei der Messung auftretende Strahlstörungen etwa infolge einer Positionsänderung der Messanordnung relativ zum Laserstrahl sich unmittelbar im Messergebnis bemerkbar machen und eine zuverlässige Wellenfrontanalyse insoweit erschweren bzw. verhindern, als nicht feststellbar ist, ob ein gemessener Wellenfronteffekt auf einer tatsächlich aufgetretenen (z.B. thermisch induzierten) Wellenfrontmodifikation oder nur einer Positionsänderung (z.B. "Wackeln") der Messanordnung relativ zum Laserstrahl beruht.

Mit anderen Worten besteht bei der Analyse von Wellenfrontaberrationen eines Laserstrahls der Bedarf, diese im Koordinatensystem des Laserstrahls selbst (und nicht in demjenigen der Messanordnung) zu ermitteln.

Des Weiteren besteht auch der Bedarf, die entsprechenden Ergebnisse hinreichend schnell im Betrieb des jeweiligen Systems zu erhalten, um etwa unter Verwendung eines adaptiven Spiegels oder dergleichen umgehend etwaige Wellenfrontaberrationen korrigieren zu können.

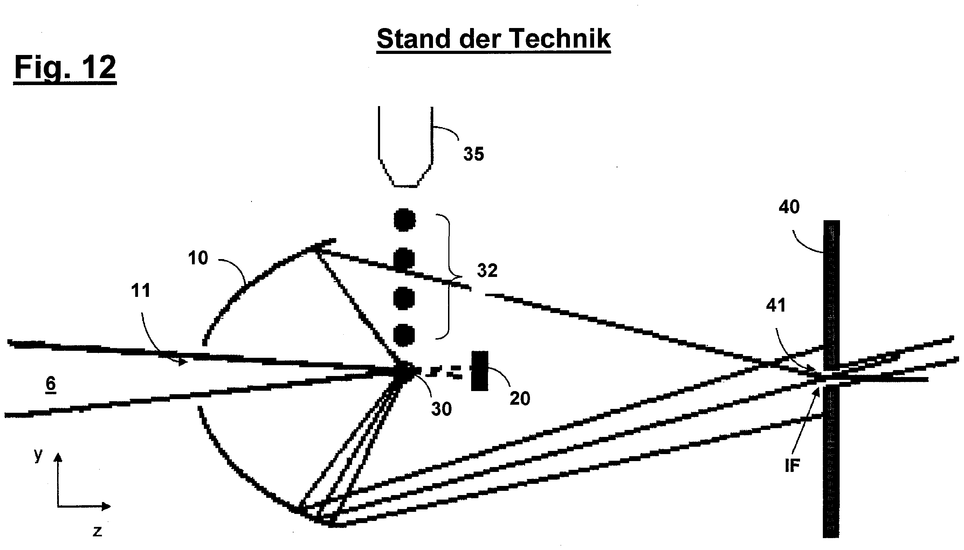

Eine Laseranwendung ist die Laserplasmaquelle, welche z.B. in der Lithographie zur Erzeugung von EUV-Licht (z.B. bei Wellenlängen von z.B. etwa 13 nm oder etwa 7 nm) eingesetzt wird und zu der Fig. 12 eine schematische Darstellung des möglichen Aufbaus zeigt. Die EUV-Laserplasmaquelle gemäß Fig. 12 weist einen (nicht gezeigten) Hochenergielaser z.B. zur Erzeugung von Infrarotstrahlung 6 (z.B. $CO_2$-Laser mit einer Wellenlänge von $\lambda \approx 10.6\ \mu m$) auf, welche über eine Fokussieroptik fokussiert wird, durch eine in einem als Ellipsoid ausgebildeten Kollektorspiegel 10 vorhandene Öffnung 11 hindurchtritt und auf ein mittels einer Targetquelle 35 erzeugtes und einer Plasmazündungsposition 30 zugeführtes Targetmaterial 32 (z.B. Zinntröpfchen) gelenkt wird. Die Infrarotstrahlung 6 heizt das in der Plasmazündungsposition 30 befindliche Targetmaterial 32 derart auf, dass dieses in einen Plasmazustand übergeht und EUV-Strahlung abgibt. Diese EUV-Strahlung wird über den Kollektorspiegel 10 auf einen Zwischenfokus IF (= "Intermediate Focus") fokussiert und tritt durch diesen in eine nachfolgende Beleuchtungseinrichtung, deren Umrandung 40 lediglich angedeutet ist und die für den Lichteintritt eine freie Öffnung 41 aufweist, ein.

Sowohl die Bestimmung der Tröpfchenposition der das Targetmaterial bildenden (z.B. Zinn-) Tröpfchen als auch die Bestimmung der Fokuslage der entsprechend nachzuführenden Laserstrahlen können mit einer sogenannten Strahlpropagationskamera erfolgen, wobei sowohl die Laserstrahlen in "Vorwärtsrichtung" (d.h. die Infrarotstrahlung 6 vor dem Auftreffen auf die jeweiligen Target-Tröpfchen) als auch die Laserstrahlen in "Rückwärtsrichtung" (d.h. die von dem jeweiligen Target-Tröpfchen zurückreflektierte Infrarotstrahlung 6) erfasst und die für die Laserstrahlsowie Tröpfchenführung benötigten Messdaten gewonnen werden. Hierbei besteht der Bedarf, thermisch induzierte Aberrationen umgehend korrigieren zu können, was eine genaue und schnelle Analyse der Laserstrahlen erfordert.

Zum Stand der Technik wird beispielhaft auf WO 2015/113713 A1 verwiesen.

ZUSAMMENFASSUNG DER ERFINDUNG

Aufgabe der vorliegenden Erfindung ist es, ein Verfahren zur Strahlanalyse bereitzustellen, welche eine zuverlässige bzw. möglichst störungsfreie sowie hinreichend schnell erfolgende Analyse ermöglichen.

Diese Aufgabe wird durch das Verfahren gemäß den Merkmalen des unabhängigen Patentanspruchs 1 gelöst.

Ein erfindungsgemäßes Verfahren zur Strahlanalyse gemäß Anspruch 1 weist folgende Schritte auf:

-    Aufspalten des Laserstrahls in eine Mehrzahl von Teilstrahlen, welche einen Fokusversatz in bezogen auf die optische Achse longitudinaler Richtung aufweisen,
-    Aufnehmen eines durch diese Teilstrahlen erzeugten Messbildes, 2. welches unterschiedlichen Fokuslagen entsprechende Spot-Bilder aufweist;
-    Durchführen einer Vorwärtssimulation des Laserstrahls in der EUV-Laserplasmaquelle auf Basis geschätzter Anfangswerte für die Strahlparameter zum Erhalt eines simulierten Bildes, und
-    Berechnen eines Satzes von Werten für die Strahlparameter auf Basis eines Vergleichs zwischen dem simulierten Bild und dem Messbild.

Unter der "Aufspaltung eines Strahls in eine Mehrzahl von Teilstrahlen" ist im Rahmen der vorliegenden Anmeldung zu verstehen, dass diese Teilstrahlen jeweils eine Kopie des ursprünglichen aufgespaltenen Strahls insofern darstellen, als die Teilstrahlen jeweils die gleichen geometrischen Parameter wie der ursprüngliche Strahl aufweisen, wobei lediglich die Intensität der Teilstrahlen gegenüber der Intensität des ursprünglichen Strahls infolge der Aufspaltung in mehrere Teilstrahlen entsprechend reduziert ist. Im Ergebnis wird mit der strahlaufspaltenden optischen Anordnung der zu analysierende Strahl in geeigneter Weise in eine Mehrzahl von Teilstrahlen repliziert, wobei mit einer Sensoranordnung geeigneter Ausdehnung mehrere Strahlschnitte bzw. Messspots gleichzeitig aufgezeichnet werden können.

Gemäß der Erfindung weist das Verfahren weiter die Schritte auf:

-    Iteratives Durchführen der Schritte der Vorwärtssimulation und des Berechnens eines Satzes von Werten für die Strahlparameter, wobei die jeweils berechneten Werte für die Strahlparameter einer jeweils nachfolgenden Vorwärtssimulation zugrundegelegt werden, und
-    Ausgeben von durch diese Iteration ermittelten Ausgabewerten für die Strahlparameter.

Gemäß einer Ausführungsform der Erfindung erfolgt somit das Berechnen eines Satzes von Werten für die Strahlparameter insbesondere iterativ auf Basis einer Mehrzahl von Vergleichen zwischen aufgenommenen Messbildern und berechneten bzw. simulierten Bildern. Hierdurch wird dem Umstand Rechnung getragen, dass unvermeidliche Interferenzen zwischen den einzelnen, unterschiedlichen Fokuslagen zugeordneten Messbildern ("Spot-Bilder") auftreten, wobei die Interferenzen insbesondere zu vergleichsweise großen gegenseitigen Störungen der Spots führen können. Die einzelnen, unterschiedlichen Fokuslagen zugeordneten Messbilder können aufgrund der gegenseitigen Störungen nicht einfach als unabhängig voneinander angesehen werden, was wiederum einer "separaten" Vorwärts- und Rückwärtspropagation - bei welcher z.B. die den einzelnen Fokuslagen zugeordneten Komponenten der strahlaufspaltenden optischen Anordnung als entkoppelt betrachtet bzw. einzeln berücksichtigt werden - durch das optische System hindurch entgegensteht bzw. ein korrektes Zurückrechnen auf die Strahlparameter verhindert.

Gemäß einer Ausführungsform umfasst das Verfahren ferner den Schritt der Aufnahme eines durch den Strahl erzeugten Nahfeldbildes.

Die Aufnahme des Nahfeldbildes und die Aufnahme eines dem durch die Teilstrahlen erzeugten Messbild entsprechenden Fernfeldbildes können simultan erfolgen. Ferner können zur Aufnahme der Messbilder auch mehr als eine Sensoranordnung (z.B. eine Sensoranordnung zur Aufnahme des Nahfeldbildes und eine weitere Sensoranordnung zur Aufnahme des Fernfeldbildes) verwendet werden.

Unter "Nahfeld" wird hierbei die Amplituden- bzw. Intensitätsverteilung in einer Schnittebene senkrecht zur Ausbreitungsrichtung im Bereich des kollimierten (d.h. aufgeweiteten bzw. nahezu divergenzfreien) Strahls bezeichnet. Das "Fernfeld" hingegen entspricht der Amplituden- bzw. Intensitätsverteilung in einer taillen- bzw. fokusnahen Ebene senkrecht zur Strahlausbreitung im Bereich des fokussierten bzw. konvergenten Strahls.

Diese Aufzeichnung des Nahfeldbildes ermöglicht es, den Betragsanteil der komplexen Amplitudenfunktion (als Quadratwurzel der Intensität) für den zu analysierenden Strahl unmittelbar im Nahfeld direkt zu bestimmen. Dies ist insoweit besonders vorteilhaft, als der Betrag der Amplitude aus dem Fernfeldbild (d.h. dem fokusnahen Bild nach Durchlaufen der strahlformenden und strahlaufspaltenden Optik) nur schwierig zu bestimmen ist, da die Fokussiereigenschaften bzw. Fernfeldbilder im Wesentlichen durch die Phase der elektromagnetischen Strahlung dominiert sind und der Betrag der Amplitude im Fernfeld nur schlecht zugänglich ist. Durch die Erfindung wird somit explizit dem Umstand Rechnung getragen, dass Nahfeld und Fernfeld insofern gewissermaßen komplementäre Information tragen, als sie unterschiedliche Aspekte der komplexen Amplitudenfunktion abbilden. Das erfindungsgemäße Konzept hat zur Folge, dass aus dem Fernfeldbild i.W. nur noch die Wellenfront bzw. die Phase der komplexen Amplitude bestimmt werden muss. Im Ergebnis wird daher das Rekonstruktionsergebnis bei der erfindungsgemäßen zusätzlichen Berücksichtigung der Nahfeldinformation im Vergleich zu einer alleinigen Berücksichtigung der Fernfeldinformation deutlich verbessert.

Der Umstand, dass erfindungsgemäß bereits eine einzige mit einer Sensoranordnung erfolgte Aufnahme (d.h. die simultane Aufnahme eines Nahfeldbildes und eines Fernfeldbildes) die vollständige, zur Strahlauswertung erforderliche Information liefert, hat den weiteren Vorteil, dass z.B. bei einem gepulsten Laser, oder auch bei anderen Lasertypen (wie z.B. CW-Lasern) mit ausgeprägten Fluktuationen in den Strahleigenschaften, einzelne (z.B. pulsaufgelöste) Wellenfrontanalysen (gewissermaßen als "single shot"-Messungen) durchgeführt werden können.

Gemäß der Erfindung umfasst die Mehrzahl von Strahlparametern wenigstens einen der Parameter Strahlgröße, Strahldezentrierung, Strahlneigung, Strahldivergenz, Astigmatismus, Koma, sphärische Aberration, sowie ggf. auch weitere Parameter. Die Aberrationen können beliebiger Ordnung sein und beispielsweise in einem hierarchischen, idealerweise der Symmetrie angepassten Funktionensystem (z.B. Zernike-Polynome) beschrieben werden.

Gemäß einer Ausführungsform erfolgt auf Basis der Ausgabewerte für die Strahlparameter eine Manipulation des Strahls unter Anpassung wenigstens eines der Strahlparameter.

Gemäß einer Ausführungsform erfolgt das Ausgeben der Ausgabewerte und die Anpassung wenigstens eines der Strahlparameter in Echtzeit während des Betriebs der EUV-Laserplasmaquelle.

Gemäß einer Ausführungsform wird im Laufe der iterativen Durchführung der Schritte der Vorwärtssimulation und des Berechnens eines Satzes von Werten für die Strahlparameter die Anzahl der variierten Strahlparameter variiert, insbesondere reduziert.

Die Erfindung beinhaltet hier das weitere Konzept, unter Nutzung des jeweils zuvor ermittelten Bildes im Sinne eines adaptiven Vorgehens den Modellumfang anzupassen.

Hierdurch kann dem Umstand Rechnung getragen werden, dass eine Freigabe einer hohen Anzahl von Parametern bei der iterativen Durchführung der Schritte der Vorwärtssimulation und des Berechnens eines Satzes von Werten für die Strahlparameter zu einer hohen numerischen Komplexität führt, was ggf. einer Echtzeitbestimmung und -anpassung der Strahlparameter (z.B. der Strahlanpassung in einer Laserplasmaquelle) entgegensteht. Vorzugsweise kann z.B. zunächst ein Start mit einem vergleichsweise kleinen Umfang des Parametersatzes erfolgen, wobei dann im weiteren Verlauf der Iteration der Parametersatz hinsichtlich der simultan variierten Parameter sukzessive erweitert (also eine adaptive Anpassung des Modells vorgenommen) wird.

Gemäß einer Ausführungsform wird im Laufe der iterativen Durchführung der Schritte der Vorwärtssimulation und des Berechnens eines Satzes von Werten für die Strahlparameter ein bei dieser Iteration angewendeter Algorithmus variiert.

Beispielsweise kann nach Erreichen eines quasi-stationären Betriebs des jeweiligen Systems (z.B. der Plasmalichtquelle), während dem nur noch geringe Änderungen der Strahlparameter auftreten, eine raschere Auswertemethode gewählt werden, um eine möglichst hohe Geschwindigkeit bei der Strahlanalyse zu erzielen. Dabei kann insbesondere die bereits zuvor gesammelte Information genutzt werden, um in Echtzeit die dann noch auftretenden geringen Änderungen der Strahlparameter bestimmen und korrigieren zu können.

Im Ergebnis kann so erreicht werden, dass etwa in einer Plasmalichtquelle der Laserstrahl hinsichtlich der Strahlparameter zugleich genau und schnell geführt werden kann, da z.B. thermisch induzierte Aberrationen umgehend korrigiert werden können.

Gemäß einer Ausführungsform erfolgt die Strahlaufspaltung unter Verwendung einer strahlaufspaltenden optischen Anordnung, welche sphärische Wellenfrontdeformationen des Strahls bewirkt. Der Erfindung liegt hier das weitere Konzept zugrunde, eine Wellenfrontbestimmung auf Basis einer durch sphärische Wellenfrontdeformationen des Strahls erzielten Aufspaltung in mehrere Teilstrahlen, denen unterschiedliche Fokuslagen zugeordnet sind, zu realisieren.

Dadurch, dass zur Strahlaufspaltung ausschließlich sphärische Wellenfrontdeformationen des Strahls durchgeführt werden, wird die Aufprägung eines zusätzlichen Koordinatensystems aufgrund der Messanordnung und damit eine unerwünschte Wechselwirkung bzw. Scherung eines solchen Koordinatensystems mit dem Koordinatensystem der Laserstrahlung vermieden. Hierbei geht die Erfindung von der Überlegung aus, dass eine sphärische Wellenfront aufgrund der an jedem Ort konstanten Krümmung kein Zentrum oder einen in irgendeiner Weise ausgezeichneten Ort besitzt, so dass durch eine in solcher Weise aufgebaute Messanordnung auch kein spezielles Koordinatensystem erzeugt, welches dem Koordinatensystem der Laserstrahlung aufgeprägt werden kann. Grundsätzlich kann ein ausschließlich sphärische Wellenfrontdeformationen des Strahls hervorrufendes optisches System aus Linsen, aber auch z.B. durch ein diffraktives optisches Element, aufgebaut werden.

Gemäß einer Ausführungsform weist die strahlaufspaltende optische Anordnung wenigstens eine diffraktive Struktur auf.

Die Erfindung beinhaltet hier weiter das Konzept, durch Verwendung einer diffraktiven Struktur die von einer solchen diffraktiven Struktur erzeugte Mehrzahl von Fokuslagen, die den unterschiedlichen Beugungsordnungen der diffraktiven Struktur entsprechen, zur Realisierung des longitudinalen Fokusversatzes zu erzielen. Mit anderen Worten macht sich die Erfindung die üblicherweise unerwünschte Eigenschaft einer diffraktiven Linse, entsprechend den unterschiedlichen Beugungsordnungen voneinander verschiedene Fokuslagen zu erzeugen, gezielt zunutze, um einen zur Strahlanalyse erforderlichen longitudinalen Fokusversatz zu realisieren. Zugleich macht sich die Erfindung den weiteren Umstand zunutze, dass ein über den vorstehend genannten longitudinalen Fokusversatz hinaus zur Ermöglichung einer simultanen Aufzeichnung am Ort der Sensoranordnung notwendiger lateraler Versatz der Teilstrahlen vergleichsweise einfach über einen "Symmetriebruch" erreichbar ist, welcher z.B. durch eine einfache Dezentrierung der diffraktiven Struktur (entweder durch Versetzung in einer zur optischen Achse senkrechten Ebene oder bereits durch entsprechendes Design der diffraktiven Struktur) erzielt werden kann.

Gemäß einer Ausführungsform ist die strahlaufspaltende optische Anordnung derart ausgelegt, dass sie einen auf die Anordnung auftreffenden Strahl in Teilstrahlen aufspaltet, wobei die Auftreffpunkte dieser Teilstrahlen auf eine quer zur Lichtausbreitungsrichtung des Strahls verlaufende Ebene eine zweidimensionale, gitterartige Verteilung bilden (wobei es sich bei dieser Ebene insbesondere um die Detektorebene, in welcher das Luftbild erzeugt wird, handeln kann). Dabei können die Auftreffpunkte als geometrisches Zentrum der jeweiligen Schwerstrahlen oder als in anderer geeigneter Weise ausgezeichnete Punkte der jeweiligen Teilstrahlen definiert sein. Des Weiteren sollen von dem Begriff "zweidimensionale, gitterartige Verteilung" auch nicht regelmäßige bzw. nicht periodische zweidimensionale Verteilungen umfasst sein.

Gemäß einer Ausführungsform weist die strahlaufspaltende optische Anordnung wenigstens zwei diffraktive Strukturen auf, welche sich in voneinander verschiedenen, insbesondere zueinander senkrechten Richtungen erstrecken.

Eine solche Ausgestaltung der erfindungsgemäßen strahlaufspaltenden optischen Anordnung erweist sich in mehrfacher Hinsicht als vorteilhaft, wobei in diesem Zusammenhang zunächst auf die effizientere Ausfüllung einer (typischerweise sich in zwei Ebenen erstreckenden) Sensor- bzw. Detektorebene hinzuweisen ist. Darüber hinaus kann jedoch - wie im Weiteren noch detaillierter erläutert - bei geeigneter Auslegung der strahlaufspaltenden optischen Anordnung bzw. der darin vorgesehenen diffraktiven Strukturen eine signifikante Messbereichserweiterung bei unverändert hoher Auflösung erzielt werden. Diese Messbereichserweiterung kann ihrerseits wiederum zum einen dazu dienen, den "Fangbereich" hinsichtlich erfassbarer Fokuswerte des zu analysierenden Strahls bei unverändert hoher Auflösung (nämlich unter Bereitstellung einer ausreichenden Anzahl von Messpunkten in dem betreffenden Fokusbereich) zu vergrößern. Auf diese Weise kann den vergleichsweise großen Fokusvariationen des zu charakterisierenden Strahls, wie sie beispielsweise in Anwendungen der Materialbearbeitung oder auch in der eingangs beschriebenen Laserplasmaquelle bei hohen Laserleistungen infolge Erwärmung und Deformation der einzelnen optischen Komponenten auftreten, Rechnung getragen werden. Dabei kann gegebenenfalls auch eine ISO-konforme Strahlcharakterisierung insofern realisiert werden, als Messpunkte in jeweils hinreichender Anzahl sowohl in unmittelbarer Nähe des Fokus des zu analysierenden Strahls als auch in hinreichender Entfernung von diesem Fokus erhalten werden. Zum anderen kann bei Bedarf innerhalb des jeweils abgedeckten Messbereichs - wie ebenfalls noch näher erläutert - eine Redundanz hinsichtlich der bereitgestellten Messpunkte bzw. Fokuswerte erzielt werden, welche wiederum zur Kalibrierung des Messsystems genutzt werden kann.

Gemäß einer Ausführungsform unterscheiden sich diese diffraktiven Strukturen in ihrer auf die jeweils erste positive Beugungsordnung bezogenen Brennweite um wenigstens einen Faktor 3, insbesondere um wenigstens einen Faktor 4, weiter insbesondere um wenigstens einen Faktor 5.

Gemäß der Erfindung ist das optische System eine Laserplasmaquelle.

Die Erfindung ist in vielen anderen Bereichen anwendbar. Eine Anwendung kann beispielsweise in der Lasermesstechnik erfolgen (z.B. überall dort, wo herkömmlicherweise Shack-Hartmann-Sensoren eingesetzt werden). Weitere vorteilhafte Anwendungen der Erfindung betreffen die Medizintechnik, die Materialbearbeitung und die Kommunikationstechnik.

Weitere Ausgestaltungen der Erfindung sind der Beschreibung sowie den Unteransprüchen zu entnehmen.

Die Erfindung wird nachstehend anhand von in den beigefügten Abbildungen dargestellten Ausführungsbeispielen näher erläutert.

KURZE BESCHREIBUNG DER ZEICHNUNGEN

Es zeigen:

Figur 1            eine schematische Darstellung einer in einem erfindungsgemäßen Verfahren beispielhaft verwendeten Messanordnung;

Figur 2a-2b     eine schematische Darstellung (Figur 2a) bzw. ein Diagramm (Figur 2b) zur Erläuterung von Aufbau und Wirkungsweise einer beispielhaften Ausführungsform einer strahlaufspaltenden optischen Anordnung;

Figur 3     eine schematische Darstellung einer in einem erfindungsgemäßen Verfahren beispielhaft verwendeten Messanordnung in einer weiteren Ausführungsform;

Figur 4-5     schematische Darstellungen zur Erläuterung des möglichen Ablaufs eines erfindungsgemäßen Verfahrens;

Figur 6     schematische Darstellungen zur Erläuterung eines der Erfindung zugrundeliegenden Problems;

Figur 7-11     schematische Darstellungen zur Erläuterung weiterer Ausführungsformen der Erfindung; und

Figur 12     eine schematische Darstellung des Aufbaus einer EUV-Lichtquelle gemäß dem Stand der Technik.

DETAILLIERTE BESCHREIBUNG BEVORZUGTER AUSFÜHRUNGSFORMEN

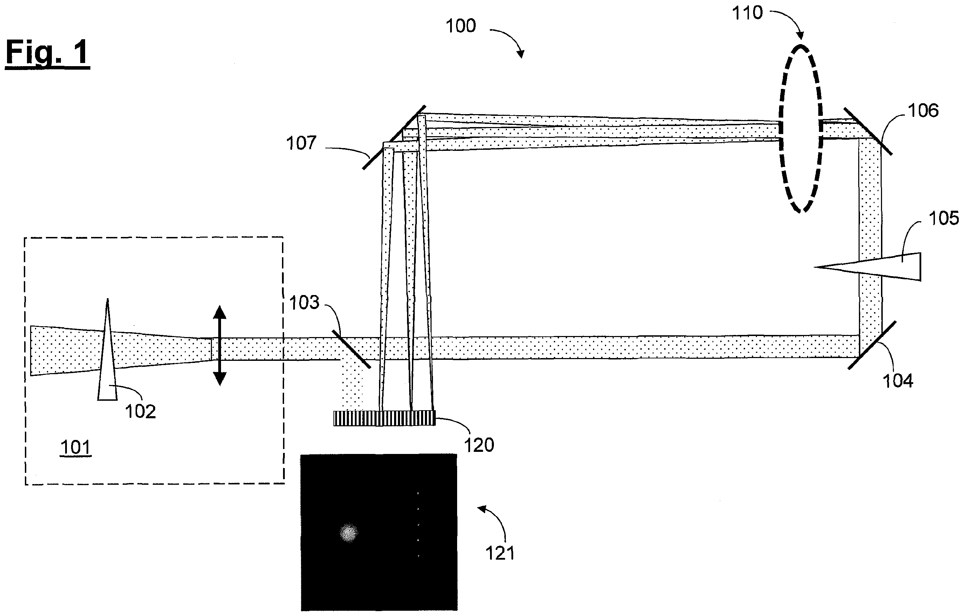

Gemäß Fig. 1 trifft in einer beispielhaften Messanordnung ein von einer (nicht gezeigten) Laserlichtquelle erzeugter, zu analysierender Strahl von einer Teleskopeinheit 101 (welche in Fig. 1 u.a. einen Abschwächer 102 aufweist) zunächst auf einen optischen Strahlteiler 103, von welchem ein Teil des Strahls unmittelbar ausgekoppelt und auf eine Sensoranordnung 120 (z.B. in Form einer CMOS-Anordnung oder einer CCD-Anordnung) gelenkt wird. Der durch den Strahlteiler 103 transmittierte Anteil gelangt über Umlenkspiegel 104, 106 (zwischen denen ein weiterer Abschwächer 105 angeordnet ist) auf eine strahlaufspaltende optische Anordnung 110 und von dieser über einen weiteren Umlenkspiegel 107 auf die Sensoranordnung 120. Gemäß Fig. 1 wird somit zusätzlich zu dem über die strahlaufspaltende optische Anordnung 110 gelenkten Teil des Strahls erzeugten Fernfeldbild auch ein Nahfeldbild aufgezeichnet, welches durch den unmittelbar ausgekoppelten Teil des Strahls erzeugt wird. Dies hat wie schon erläutert den Vorteil, dass der Betrag der Amplitude bereits in unmittelbarer Form vorliegt und deshalb durch ein im Weiteren noch erläutertes Retrieval-Schema i.W. nur noch die Wellenfront bzw. die Phase der komplexen Amplitude bestimmt werden muss.

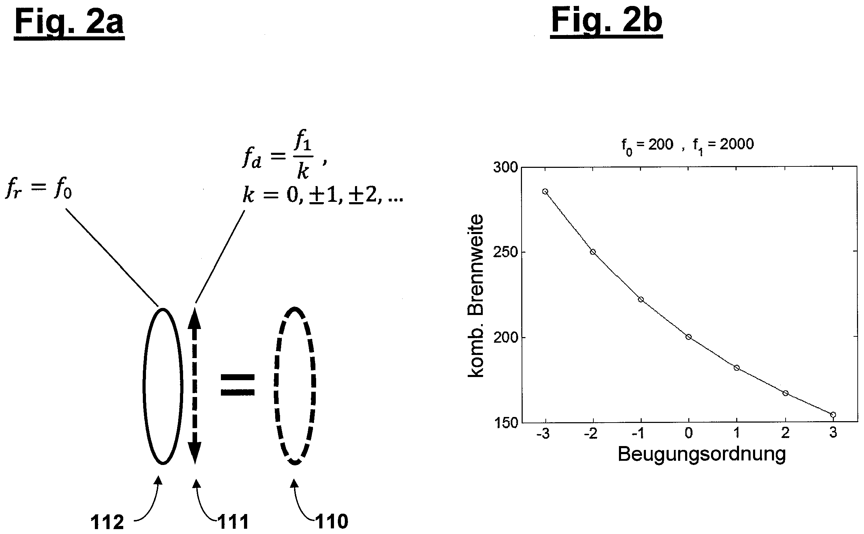

Die strahlaufspaltende optische Anordnung 110 weist im Ausführungsbeispiel wie in Fig. 2a angedeutet eine diffraktive Struktur 111 sowie ein refraktives optisches Element (refraktive Linse) 112 auf, welche hier monolithisch ausgebildet sind und gemeinsam ein multifokales optisches Element bilden. In einem konkreten Ausführungsbeispiel kann es sich bei dem refraktiven optischen Element 112 um eine Plankonvexlinse handeln, wobei die diffraktive Struktur 111 auf der planen Fläche dieser Plankonvexlinse ausgebildet sein kann. In weiteren Ausführungsformen können diffraktive Struktur und refraktives optisches Element bzw. Linse auch separat und mit (vorzugsweise geringem) Abstand voneinander ausgestaltet sein. Grundsätzlich besitzt eine diffraktive Linse entsprechend den auftretenden Beugungsordnungen positive wie negative Brennweiten entsprechend

$$f_{diff} = \frac{f_1}{k} \quad , \quad k = 0, \pm 1, \pm 2, \dots \qquad (1)$$

Darin bezeichnet $f_1$ die Brennweite der ersten positiven Beugungsordnung und $k$ den Strahlindex bzw. die Beugungsordnung. Die Intensität des jeweiligen Fokus hängt dabei unmittelbar von der Ausführungs- und Approximationsform des zugrundeliegenden (näherungsweise parabolischen Phasenprofils) ab. In Kombination mit einer refraktiven Linse der Brennweite $f_0$ ergibt sich ein multifokales optisches System mit mehreren Nutzbrennweiten $f_k$, $k = 0, \pm 1, \dots, k_{max}$, wobei bei Vernachlässigung des Abstandes zwischen der diffraktiven Struktur und der refraktiven Linse näherungsweise gilt

$$f_k \approx \frac{f_0 f_1}{f_1 + k f_0} \qquad (2)$$

Dieser Zusammenhang ist in Fig. 2b für $f_1 \gg f_0$ veranschaulicht.

Die Erfindung ist nicht auf die Ausgestaltung der strahlaufspaltenden optischen Anordnung 110 mit einer solchen diffraktiven Struktur beschränkt. Vielmehr kommt es bei der Ausgestaltung der strahlaufspaltenden optischen Anordnung darauf an, dass diese nach Möglichkeit sphärische Wellenfrontdeformationen des auf die strahlaufspaltende optische Anordnung auftreffenden Strahls bewirkt. In weiteren Ausführungsformen kann auch eine andere, hierzu geeignete strahlaufspaltende optische Anordnung, z.B. in Form eines Etalons, verwendet werden.

Die von der strahlaufspaltenden optischen Anordnung ausgehenden Teilstrahlen treffen - unter erneutem Bezug auf Fig. 1 - sodann auf die Sensoranordnung 120, auf welcher entsprechend dem Fokusversatz unterschiedliche Spot-Bilder erzeugt werden, deren Größe im gezeigten Beispiel in der Mitte bzw. im perfekten Fokus am kleinsten ist und zum Rand hin zunimmt. Die von der Sensoranordnung 120 erzeugte Aufnahme ist mit "121" bezeichnet.

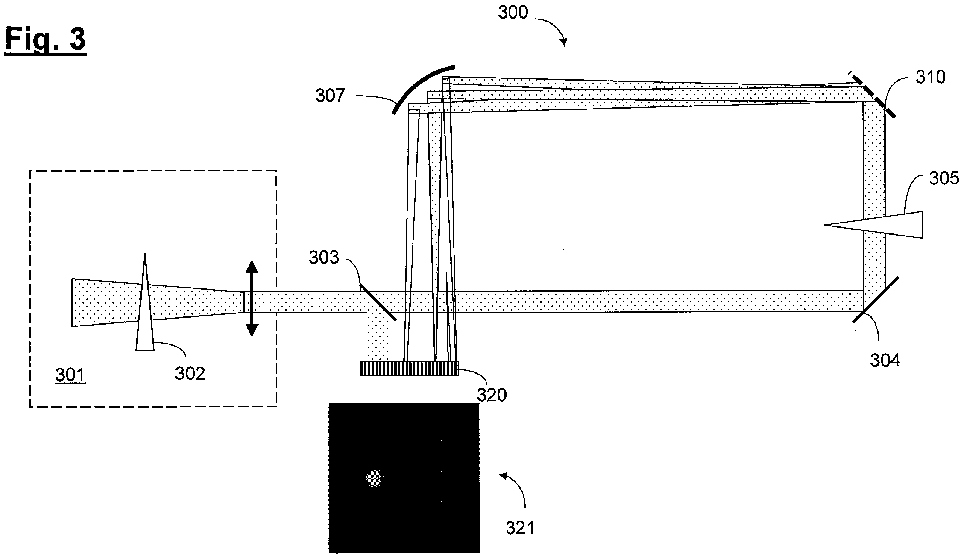

Fig. 3 zeigt eine weitere Ausführungsform einer Messanordnung, wobei zu Fig. 1 analoge bzw. im Wesentlichen funktionsgleiche Komponenten mit um "200" erhöhten Bezugsziffern bezeichnet sind. Die Ausführung von Fig. 3 unterscheidet sich von derjenigen aus Fig. 1 dadurch, dass hier eine diffraktive Struktur 310 in Form eines reflektiven Elements vorgesehen ist, wobei ferner ein sphärischer Umlenkspiegel 307 vorgesehen ist.

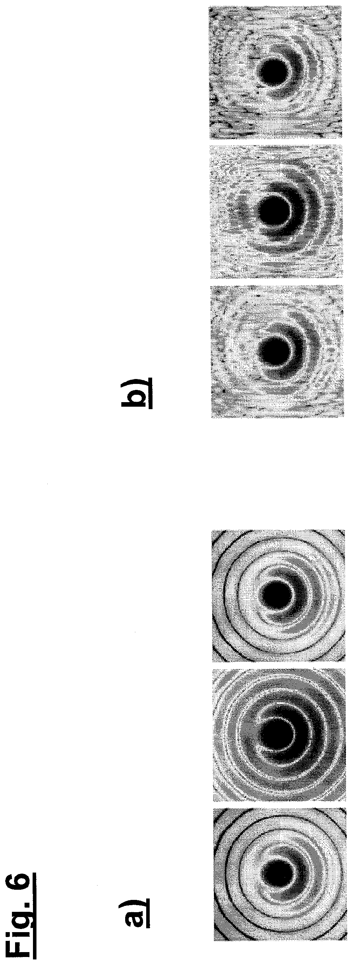

Grundsätzlich würde es die Aufnahme dieser einzelnen, jeweils unterschiedlichen Fokuslagen zugeordneten Spot-Bilder durch Anwendung bekannter, sogenannter "Phase Retrieval"-Verfahren (z.B. Gerchberg-Saxton-Algorithmus) erlauben, auf die Phase der Wellenfront zurückzurechnen, wenn die einzelnen Spot-Bilder voneinander unabhängig wären (also keine gegenseitige Beeinflussung durch Interferenz vorliegen würde). Vorliegend sind jedoch unvermeidliche Interferenzen zwischen den einzelnen Spot-Bildern vorhandenen, welche wie in Fig. 6 angedeutet zu einer ausgeprägten gegenseitigen Störung führen (wobei Fig. 6a ideale Spot-Bilder ohne Berücksichtigung der Interferenz und Fig. 6b reale Spot-Bilder mit Berücksichtigung der Interferenz zeigt).

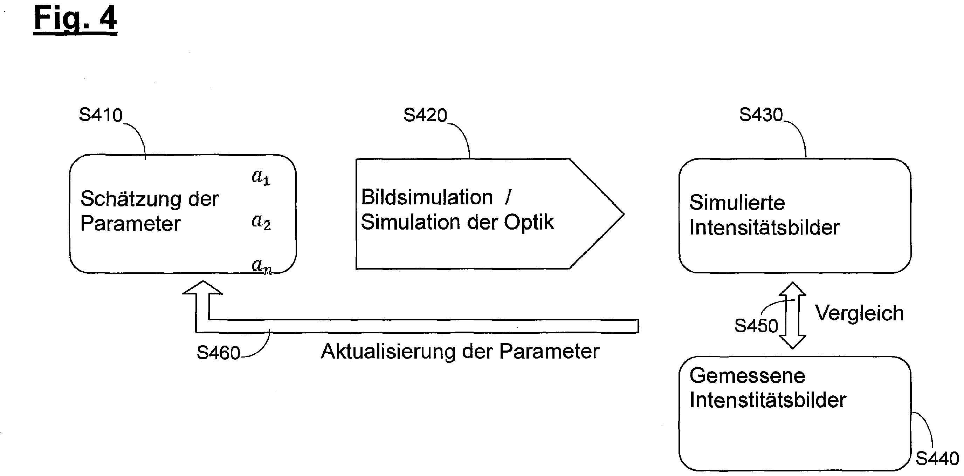

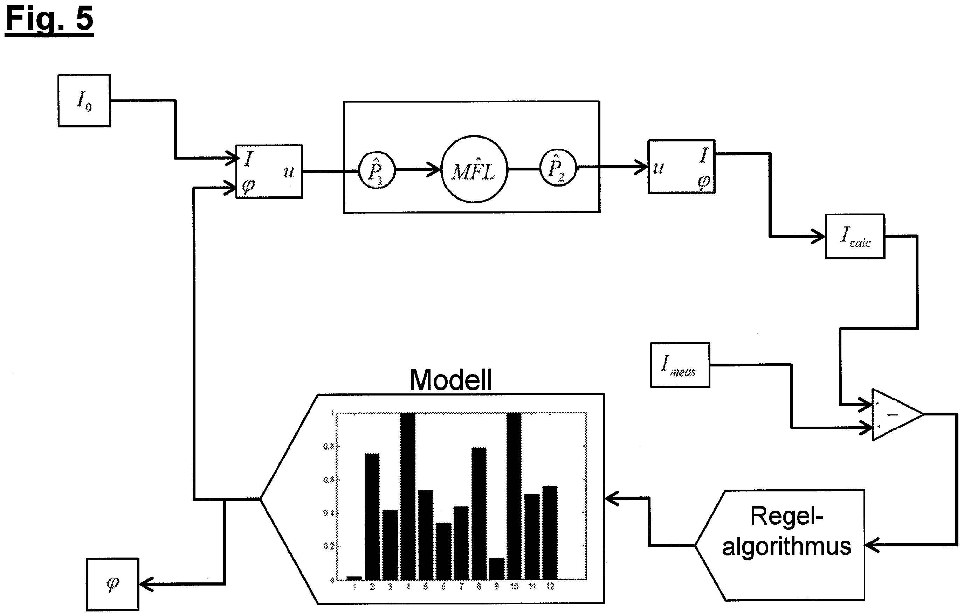

Mathematisch bedeutet dieser Umstand, dass keine eindeutige Rücktransformation zur unmittelbaren Berechnung der Strahlparameter möglich ist. Um diesem Problem Rechnung zu tragen, werden gemäß der Erfindung in einem modellbasierten Ansatz iterativ Vergleiche zwischen jeweils berechneten bzw. simulierten Bildern und dem aufgenommenen Messbild durchgeführt, wie im Folgenden unter Bezug auf Fig. 4 und Fig. 5 beschrieben wird:

Wie in dem schematischen Diagramm von Fig. 4 angedeutet werden hierbei zunächst Schätzwerte für die gesuchten Strahlparameter zugrundegelegt (Schritt S410), wobei der entsprechende Parametersatz hier mit $a_1$, $a_2$, $a_3$,... bezeichnet ist.

Bei diesen Parametern zur Beschreibung des Strahls kann es sich beispielsweise um Strahlgröße, Strahldezentrierung in x-Richtung, Strahldezentrierung in y-Richtung, Strahlneigung in x-Richtung, Strahlneigung in y-Richtung, Strahldivergenz, Astigmatismus in x-Richtung, Astigmatismus in y-Richtung, Koma in x-Richtung, Koma in y-Richtung und sphärische Aberration handeln. Hierbei kann ggf. auch eine Zernike-Parametrisierung erfolgen, um entsprechende Wellenfrontaberrationen auch höherer Ordnung zu beschreiben und zu ermitteln.

Sodann erfolgt eine Vorwärtssimulation (Schritt S420) zur Ermittlung eines berechneten Bildes. Diese Vorwärtssimulation umfasst gemäß Fig. 5 insbesondere eine Freiraumpropagation $P_1$ in Form einer Fouriertransformation vor der strahlaufspaltenden optischen Anordnung 110 bzw. 310 (bezogen auf die Lichtausbreitungsrichtung) und eine Freiraumpropagation $P_2$ ebenfalls in Form einer Fourier-transformation nach der strahlaufspaltenden optischen Anordnung 110 bzw. 310 (bezogen auf die Lichtausbreitungsrichtung), welche jeweils auf die komplexe Amplitudenfunktion

$$u = \sqrt{I \cdot e^{i\varphi}}$$ wirken.

Geht man von einer Strahlausbreitung in die positive z-Richtung aus, so ist die zu bestimmende Strahlamplitude (im Bereich der skalaren Beugung) in der Referenzebene (idealerweise Nahfeldebene) am Ort $z_0$ durch $u(x, y \mid z_0)$ bezeichnet. Nach Durchlaufen der Freiraumstrecke zwischen der Referenzebene und der Ebene des wirksamen optischen Elementes (strahlaufspaltende optische Anordnung 110 bzw. diffraktive optische Struktur) liegt am Eintritt des die strahlaufspaltende optische Anordnung 110 bzw. 310 bildenden optischen Elements an der Position $z_1$ die Amplitude

$$u(x, y \mid z_{1-}) = \hat{P}_1 \, u(x, y \mid z_0) = IFT_{xy}\left[\Pi(z_1 - z_0) \cdot FT_{xy}\left[u(x, y \mid z_0)\right]\right] \qquad (3)$$

vor. Das die strahlaufspaltende optische Anordnung 110 bzw. 310 bildende optische Element prägt in der Approximation des unendlich dünnen Elements multiplikativ die Amplitudenfunktion $T(x,y) = t(x,y).\exp(i\varphi(x,y))u(x,y \mid z_{1-})$ entsprechend

$$u(x, y \mid z_{1+}) = T(x, y) \, u(x, y \mid z_{1-}) \qquad (4)$$

auf. Über eine weitere Freiraumpropagation vom die strahlaufspaltende optische Anordnung 110 bzw.310 bildenden optischen Element zur Sensoranordnung 120 bzw. 320 (deren Ebene senkrecht zur z-Achse an der Position $z_2$ liegt) gelangt man schließlich zur Amplitude auf der Ebene der Sensoranordnung 120 bzw. 320 gemäß

$$u(x, y \mid z_2) = \hat{P}_2 \, u(x, y \mid z_{1+}) = IFT_{xy}\left[\Pi(z_2 - z_1) \cdot FT_{xy}\left[u(x, y \mid z_{1+})\right]\right] \qquad (5)$$

Den an der ortsauflösenden Sensoranordnung 120 bzw. 320 detektierten Intensitätsverlauf erhält man über die Bildung es Betragsquadrats gemäß

$$I_{Sensor}(x,y) = \left| u(x,y \mid z_2) \right|^2 \qquad (6)$$

Der Propagator der Freiraumausbreitung ist aus dem Formalismus der Fourier-Optik bekannt. Bei der Propagation von einer Ebene senkrecht zur z-Achse bei der Position *z'* zu einer parallelen Ebene bei der Position *z* wird die Amplitude zunächst gemäß

$$\tilde{u}(f_x, f_y \mid z') = FT_{xy}\left[ u(x,y \mid z') \right] = \iint dxdy\, u(x,y \mid z') \exp\left(- 2\pi i\left( f_x x + f_y y \right)\right) \qquad (7)$$

über die 2D-Fouriertransformation in den Frequenzraum transformiert und dort mit der Freiraumpropagationsfunktion

$$\Pi(d \mid f_x, f_y) = \exp\left( 2\pi\, i\, \frac{d}{\lambda} \gamma(f_x, f_y) \right) \qquad (8)$$

über die Distanz *d = z - z'* multipliziert. Die Phase in der Propagationsfunktion ist dabei durch

$$\gamma(f_x, f_y) = \sqrt{1 - \lambda^2\left( f_x^2 + f_y^2 \right)} \qquad (9)$$

gegeben, wobei $f_x, f_y$ für die Ortsfrequenzen und $\lambda$ für die Wellenlänge der Strahlung stehen. Zur Amplitude in der Ebene bei *z* im Ortsraum gelangt man schließlich durch Rücktransformation über die inverse Fourier-Transformation entsprechend

$$u(x,y \mid z) = \iint_A dxdy\, \Pi(z - z' \mid f_x, f_y)\, \tilde{u}(f_x, f_y \mid z') \exp\left(+ 2\pi i\left( f_x x + f_y y \right)\right) \qquad (10)$$

Das entsprechend berechnete Bild (enthaltend die berechneten Intensitätswerte I$_{calc}$) wird subtrahiert von dem aufgenommenen Messbild (enthaltend die gemessenen Intensitätswerte I$_{meas}$), woraufhin entsprechend modifizierte Modellparameter zur Beschreibung des Strahls ermittelt und einer erneuten Vorwärts-Simulation zugrundegelegt werden (Schritt S460 in Fig. 4). Hierbei wird eine Optimierung z.B. unter Anwendung eines Levenberg-Marquardt-Algorithmus durchgeführt. Daraufhin erfolgt gemäß Fig. 5 durch Vorwärtssimulation die erneute Ermittlung berechneter Intensitätswerte I$_{calc}$ unter Erhalt eines neuen berechneten Bildes, wobei erneut die Differenz zwischen dem berechneten Bild und dem aufgenommenen Messbild ermittelt wird. Dies wird iterativ solange durchgeführt, bis die Differenz zwischen dem berechneten Bild und dem aufgenommenen Messbild ausreichend gering ist (bzw. einen vorgegebenen Schwellenwert unterschreitet), woraufhin die entsprechenden Parameter zur Beschreibung des Strahls ausgegeben werden.

Insbesondere ist es wie schon erläutert vorteilhaft, wenn der Betrag der Amplitude aus der Nahfeldmessung vorliegt und nicht modellhaft beschrieben und angepasst werden muss. Dadurch wird einerseits die Zahl der beschreibenden Parameter ggf. erheblich reduziert und andererseits die Güte der über den zu vermessenden Strahl gewonnenen Information verbessert.

Gemäß der Erfindung wird vorzugsweise weiter berücksichtigt, dass die Freigabe einer hohen Anzahl von Parametern zu einer hohen numerischen Komplexität führt. Somit erfolgt vorzugsweise zunächst ein Start mit einem vergleichsweise kleinen Umfang des Parametersatzes, wobei dann der Parametersatz hinsichtlich der simultan variierten Parameter sukzessive erweitert, also eine adaptive Anpassung des Modells vorgenommen wird. So kann etwa bei grundsätzlich gesuchten zwanzig Parametern zunächst eine Freigabe nur von zehn dominierenden Parametern erfolgen.

Des Weiteren kann z.B. nach Erreichen eines quasi-stationären Betriebs des jeweiligen Systems (z.B. einer weitgehend stabil betriebenen Plasmalichtquelle), in welchem typischerweise nur noch geringe Änderungen der Strahlparameter auftreten, auch die jeweilige Auswertemethode bzw. den Algorithmus angepasst werden, um eine möglichst hohe Geschwindigkeit bei der Strahlanalyse zu erzielen. Dabei kann insbesondere die bereits gesammelte Information genutzt werden, um in Echtzeit die dann noch auftretenden geringen Änderungen der Strahlparameter bestimmen und korrigieren zu können. In dieser Phase kann auch das ursprünglich nichtlineare Optimierungsproblem linear approximierbar sein. Im Ergebnis kann so erreicht werden, dass etwa in einer Plasmalichtquelle der Laserstrahl hinsichtlich der Strahlparameter zugleich genau und schnell geführt werden kann.

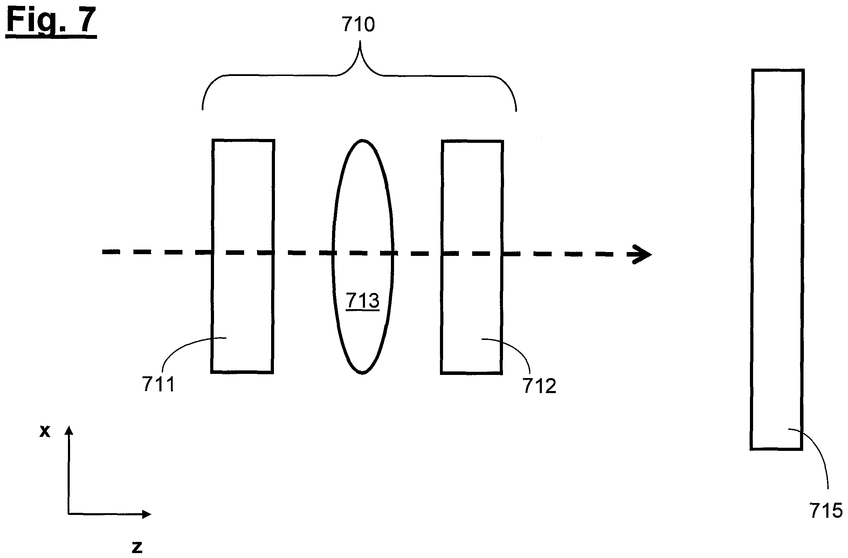

Fig. 7-11 zeigen schematische Darstellungen zur Erläuterung weiterer Ausführungsformen der Erfindung. Diesen Ausführungsformen ist gemeinsam, dass hier die erfindungsgemäße strahlaufspaltende optische Anordnung derart ausgestaltet ist, dass die Strahlaufspaltung insofern "zweidimensional" erfolgt, als die bei dieser Aufspaltung relativ zueinander mit longitudinalem Fokusversatz erzeugten Strahlen in jeweils einer Ebene quer zur Lichtausbreitungsrichtung hinsichtlich der Auftreffpunkte auf die Ebene eine zweidimensionale gitterartige Anordnung bilden und somit - gemäß einem Aspekt dieser Ausgestaltung - insbesondere zur effektiven Ausfüllung einer zweidimensionalen Sensor- bzw. Detektorfläche geeignet sind. Gemäß einem weiteren Aspekt dieser Ausgestaltung kann hierbei auch eine signifikante Messbereichserweiterung erzielt werden, wird im Folgenden detaillierter beschrieben wird.

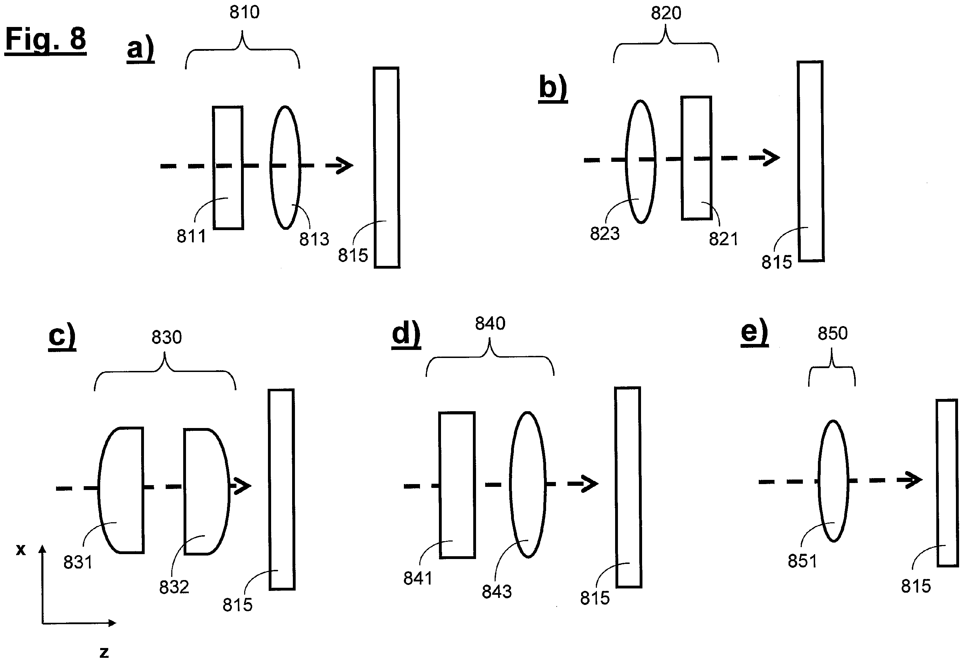

Zur Erzielung dieser zweidimensionalen Strahlaufspaltung können - ohne dass die Erfindung hierauf beschränkt wäre - beispielsweise in der in Fig. 7 schematisch dargestellten Ausführungsform zwei diffraktive optische Elemente 711, 712 vorgesehen sein, von denen wiederum beispielhaft das eine diffraktive Element 711 bezogen auf die (in z-Richtung im eingezeichneten Koordinatensystem verlaufende) Lichtausbreitungsrichtung vor einem analog zu der Ausführungsform von Fig. 2a vorhandenen refraktiven optischen Element (refraktive Linse) 713 und das andere diffraktive optische Element 712 nach diesem refraktiven optischen Element 713 angeordnet ist. In weiteren Ausführungsformen (von denen einige schematisch in Fig. 8a-e dargestellt sind) kann die zur zweidimensionalen Strahlaufspaltung erforderliche diffraktive Struktur auch in anderer geeigneter Weise realisiert werden.

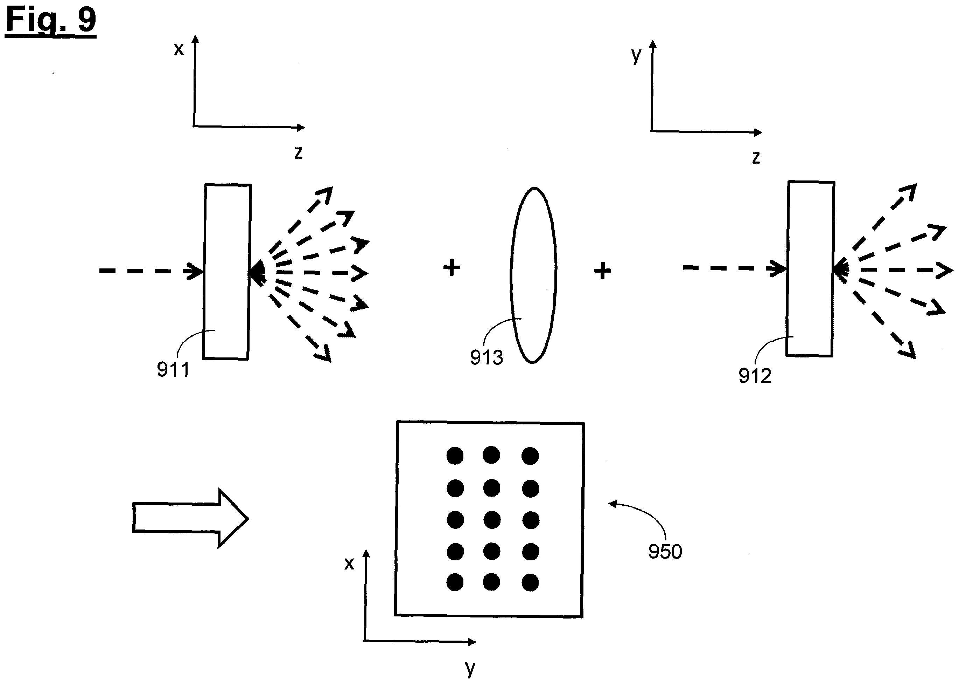

Die Wirkungsweise der gemäß Fig. 7 durch die diffraktiven optischen Elemente 711, 712 und das refraktive optische Element 713 gebildeten strahlaufspaltenden optischen Anordnung ist in Fig. 9 veranschaulicht (wobei analoge bzw. funktionsgleiche Komponenten mit um "200" erhöhten Bezugsziffern bezeichnet sind). Demnach erzeugt gemäß Fig. 9 das erste diffraktive optische Element 911 eine Aufspaltung des eintreffenden Strahls unter Auffächerung in Teilstrahlen, welche in der x-z-Ebene divergieren, und das zweite diffraktive optische Element 911 erzeugt eine Aufspaltung unter Auffächerung in Teilstrahlen, welche in der y-z-Ebene divergieren. Mit "950" ist die in der Sensor- bzw. Detektorebene erhaltene, resultierende zweidimensionale Strahlverteilung bezeichnet.

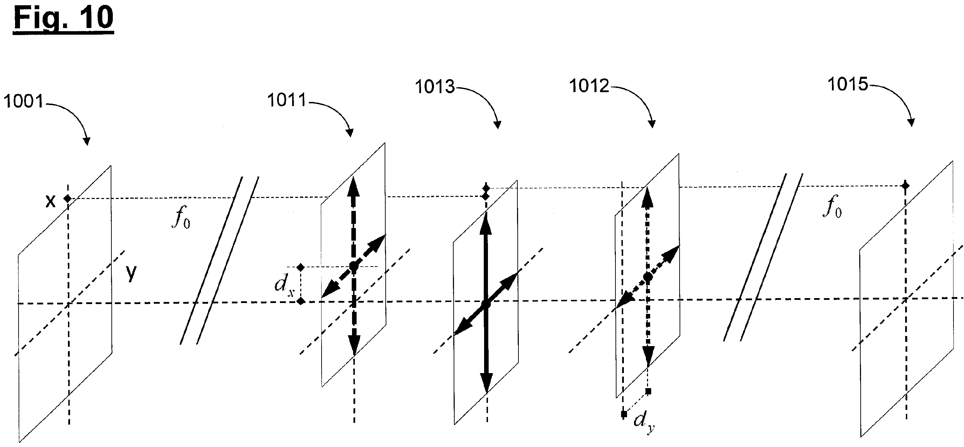

Fig. 10 zeigt ausgehend von dem prinzipiellen Aufbau der strahlaufspaltenden optischen Anordnung gemäß Fig. 7 bzw. Fig. 9 eine schematische Darstellung zur Erläuterung einer beispielhaften geometrischen Auslegung. Die vorstehend genannten beiden diffraktiven optischen Elemente sind hier lediglich durch die jeweiligen Ebenen 1011 und 1012 angedeutet, wobei zugleich zur Erzielung eines lateralen Versatzes der Teilstrahlen ("Symmetriebruch") eine Dezentrierung durch Versetzung der jeweiligen diffraktiven Struktur in einer zur optischen Achse senkrechten Ebene um jeweils eine Strecke "$d_x$" bzw. "$d_y$" angedeutet ist. Mit "1001" ist in Fig. 10 die Eintrittsebene des Strahls und mit "1015" die Sensor- bzw. Detektorebene bezeichnet.

Das durch die strahlaufspaltende optische Anordnung gemäß Fig. 7 bzw. 9 gebildete multifokale optische System weist analog zu der Ausführungsform von Fig. 2a mehrere Nutzbrennweiten auf, wobei hier bei Vernachlässigung des Abstandes zwischen den diffraktiven optischen Elementen und der refraktiven Linse näherungsweise gilt:

$$f_{m,n} \approx \frac{f_0 f_1^* f_2^*}{f_1^* n + f_2^* m + f_0 m\, n} \tag{11}$$

Dabei sind mit $f_1^*$ und $f_2^*$ die jeweiligen Brennweiten des ersten bzw. zweiten diffraktiven optischen Elements 911, 912 (bezogen auf die jeweils erste positive Beugungsordnung) und mit $f_0$ die Brennweite des refraktiven optischen Elements 913 bezeichnet, während "m" bzw. "n" die Beugungsordnungen der jeweiligen Beugung an dem ersten bzw. zweiten diffraktiven optischen Element 911, 912 bezeichnen.

Die Brennweiten des ersten bzw. zweiten diffraktiven optischen Elements 911, 912 sind voneinander verschieden gewählt mit der Folge, dass das Element mit der relativ kleineren Brennweite den relativ größeren longitudinalen Fokusversatz erzeug und umgekehrt. In einem konkreten Ausführungsbeispiel kann etwa die Brennweite des ersten diffraktiven optischen Elements 911 um einen Faktor fünf größer sein als die Brennweite des zweiten diffraktiven optischen Elements 912.

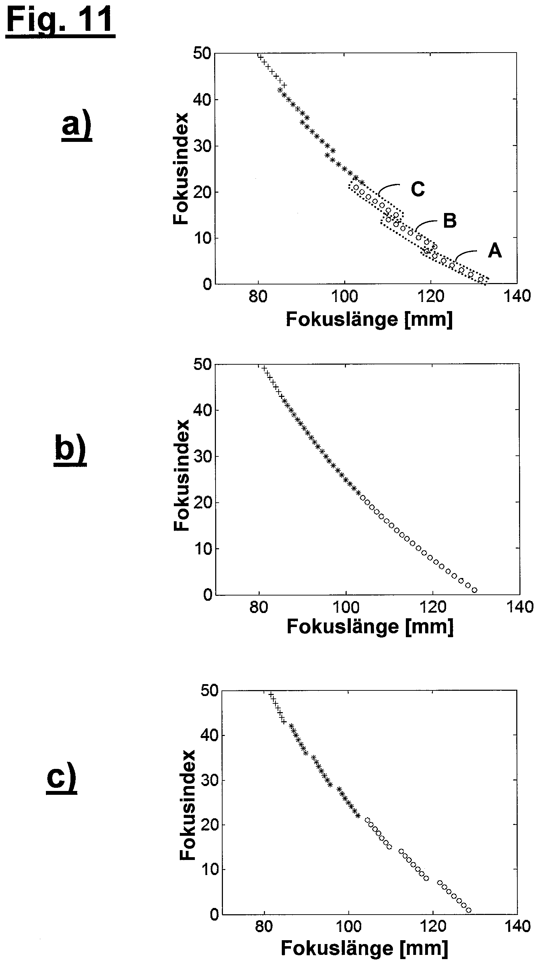

Bei geeigneter Wahl der o.g. Parameter (d.h. der Brennweiten ($f_1^*$, $f_2^*$ und $f_0$) sowie der genutzten Wertebereiche der Beugungsordnungen (n, m) kann nun in unterschiedlicher Weise eine Messbereichserweiterung erzielt und genutzt werden, wie im Weiteren unter Bezugnahme auf Fig. 11a-c erläutert wird.

Fig. 11a zeigt zunächst eine mögliche, mit einer erfindungsgemäßen strahlaufspaltenden optischen Anordnung gemäß Fig. 7 bzw. 9 über die einzelnen aufgefächerten Strahlen erhaltene Verteilung von Fokuslängen. Dabei entspricht jeweils eine Wertegruppe "A", "B", "C",... von jeweils sieben (entsprechend der Anzahl von Beugungsordnungen im beispielhaft gewählten Wertebereich von -3 bis +3) Werten bzw. Punkten im Diagramm einer Zeile in der in der Sensor- bzw. Detektorebene erhaltenen zweidimensionalen Strahlverteilung. Zum einen ist ersichtlich, dass infolge der zweidimensionalen Strahlauffächerung eine Meßbereichserweiterung gegenüber der im Ausführungsbeispiel von Fig. 2a erfolgten eindimensionalen Strahlauffächerung (welche lediglich eine einzige der Wertegruppen "A", "B", "C",... ergeben hätte) erzielt wird mit der Folge, dass ein vergleichsweise großer Messbereich an Fokuslängen mit zugleich hoher Auflösung abgedeckt wird. Weiter ist ersichtlich, dass gemäß Fig. 11a diese Meßbereichserweiterung auch zur Kalibrierung genutzt werden kann, indem nämlich Redundanzen insofern geschaffen werden, als sich die Wertegruppen "A", "B", "C",... hinsichtlich der jeweiligen Fokuslängen-Werte im Diagramm von Fig. 11a teilweise überlappen. In weiteren Ausführungsformen kann, wie in Fig. 11b und Fig. 11c dargestellt, auf solche Redundanzen auch zugunsten einer weiteren Steigerung des insgesamt abgedeckten Messbereichs an Fokuslängen verzichten werden, wobei die einzelnen Wertegruppen "A", "B", "C",... von jeweils sieben Werten bzw. Punkten kontinuierlich (gemäß Fig. 11b) oder auch mit gewissen Lücken bzw. Abständen zwischen den Wertegruppen "A", "B", "C",... (gemäß Fig. 11c) erzeugt werden können.

Die vorstehend beschriebene Meßbereichserweiterung kann genutzt werden, um großen Fokusvariationen des jeweils zu charakterisierenden Strahls, wie sie beispielsweise in Anwendungen der Materialbearbeitung insbesondere bei hohen Laserleistungen infolge Erwärmung und Deformation der einzelnen optischen Komponenten auftreten, Rechnung zu tragen, indem nämlich der "Fangbereich" der jeweiligen Fokuswerte siginifikant (gemäß Fig. 11a-c z.B. um etwa den Faktor sieben) bei unverändert hoher Auflösung vergrößert wird. Weiter insbesondere kann diese Meßbereichserweiterung dazu genutzt werden, eine insgesamt ISO-konforme Strahlcharakterisierung insofern zu realisieren, als Messpunkte in jeweils "hinreichender" bzw. durch die jeweilige ISO-Norm vorgeschriebener Anzahl sowohl in unmittelbarer Nähe des Fokus als auch in hinreichender Entfernung vom Fokus (z.B. in einer Entfernung von zwei Raleighlängen) des Strahls erhalten wird.

In weiteren Ausführungsformen (von denen einige schematisch in Fig. 8a-e dargestellt sind) kann die zur zweidimensionalen Strahlaufspaltung erforderliche diffraktive Struktur auch in anderer geeigneter Weise erzielt werden. Dabei ist in Fig. 8a-e die Sensoranordnung (z.B. CCD-Kamera) jeweils mit "815" bezeichnet. Gemäß Fig. 8a-b kann anstelle zweier diffraktiver optischer Elemente auch ein einziges, für sich bereits "zweidimensionales" (d.h. periodische diffraktive Strukturen in voneinander verschiedenen, insbesondere senkrechten Richtungen aufweisendes) diffraktives optisches Element 811 bzw. 821 eingesetzt und bezogen auf die Lichtausbreitungsrichtung in einer strahlaufspaltenden optischen Anordnung 810 bzw. 820 entweder vor (Fig. 8a) oder nach (Fig. 8b) dem refraktiven optischen Element 813 bzw. 823 angeordnet werden. Gemäß Fig. 8c können in einer strahlaufspaltenden optischen Anordnung 830 die (sich wiederum in voneinander verschiedenen, insbesondere senkrechten Richtungen erstreckenden) diffraktiven Strukturen auch auf plan-konvexen Linsen 831, 832 ausgebildet sein. Gemäß Fig. 8d kann eine strahlaufspaltende optische Anordnung 840 auch ein diffraktives optisches Element 841 mit einer komplexen diffraktiven Struktur (z.B. als komplex kodiertes CGH), welche eine Beugung in voneinander verschiedenen, insbesondere senkrechten Richtungen bewirkt, in Kombination mit einer refraktiven Linse 843 aufweisen, wobei auch bei dieser Ausgestaltung das diffraktive optische Element 841 alternativ bezogen auf die Lichtausbreitungsrichtung auch nach der refraktiven Linse 843 angeordnet sein kann. Gemäß Fig. 8e kann eine strahlaufspaltende optische Anordnung 850 auch als refraktive Linse 851, welche diffraktive Strukturen sowohl auf ihrer Lichteintritts- als auch ihrer Lichtaustrittsfläche aufweist, ausgestaltet sein. In sämtlichen der vorstehend beschriebenen Ausführungsformen können die diffraktiven optischen Elemente bzw. Beugungsgitter als Amplitudengitter, Phasengitter oder Hybridgitter realisiert sein.

Wenn die Erfindung auch anhand spezieller Ausführungsformen beschrieben wurde, erschließen sich für den Fachmann zahlreiche Variationen und alternative Ausführungsformen, z.B. durch Kombination und/oder Austausch von Merkmalen einzelner Ausführungsformen.

## Patentansprüche

1. Verfahren zur Strahlanalyse in einer EUV-Laserplasmaquelle einer mikrolithographischen Projektionsbelichtungsanlage,

   - wobei eine Mehrzahl von Strahlparametern eines von einer Laserlichtquelle in der EUV-Laserplasmaquelle erzeugten und sich entlang einer optischen Achse (OA) ausbreitenden Laserstrahls zur Analyse geometrischer Strahlparameter und Wellenfrontabweichungen ermittelt werden,
   - wobei diese Mehrzahl von Strahlparametern wenigstens einen der Parameter Strahlgröße, Strahldezentrierung, Strahlneigung, Strahldivergenz, Astigmatismus, Koma, sphärische Aberration umfasst, und
   wobei das Verfahren folgende Schritte aufweist:

      a) Aufspalten des Laserstrahls in eine Mehrzahl von Teilstrahlen, welche einen Fokusversatz in bezogen auf die optische Achse (OA) longitudinaler Richtung aufweisen;

b) Aufnehmen eines durch diese Teilstrahlen erzeugten Messbildes, welches unterschiedlichen Fokuslagen entsprechende Spot-Bilder aufweist;

c) Durchführen einer Vorwärtssimulation des Laserstrahls in der EUV-Laserplasmaquelle auf Basis geschätzter Anfangswerte für die Strahlparameter zum Erhalt eines simulierten Bildes; und

d) Berechnen eines Satzes von Werten für die Strahlparameter auf Basis eines Vergleichs zwischen dem simulierten Bild und dem Messbild;

e) Iteratives Durchführen der Schritte c) und d), wobei die jeweils berechneten Werte für die Strahlparameter einer jeweils nachfolgenden Vorwärtssimulation zugrundegelegt werden; und

f) Ausgeben von durch die Iteration im Schritt e) ermittelten Ausgabewerten für die Strahlparameter.

2. Verfahren nach Anspruch 1, **dadurch gekennzeichnet, dass** im Laufe der iterativen Durchführung der Schritte c) und d) die Anzahl der variierten Strahlparameter variiert, insbesondere reduziert wird.

3. Verfahren nach Anspruch 1 oder 2, **dadurch gekennzeichnet, dass** im Laufe der iterativen Durchführung der Schritte c) und d) ein bei dieser Iteration angewendeter Algorithmus variiert wird.

4. Verfahren nach einem der vorhergehenden Ansprüche, **dadurch gekennzeichnet, dass** dieses ferner den Schritt der Aufnahme eines durch den Laserstrahl erzeugten Nahfeldbildes umfasst.

5. Verfahren nach Anspruch 4, **dadurch gekennzeichnet, dass** die Aufnahme dieses Nahfeldbildes und die Aufnahme eines dem durch die Teilstrahlen erzeugten Messbild entsprechenden Fernfeldbildes simultan erfolgen.

6. Verfahren nach einem der vorhergehenden Ansprüche, **dadurch gekennzeichnet, dass** auf Basis der Ausgabewerte für die Strahlparameter eine Manipulation des Laserstrahls unter Anpassung wenigstens eines der Strahlparameter erfolgt.

7. Verfahren nach Anspruch 6, **dadurch gekennzeichnet, dass** das Ausgeben der Ausgabewerte und die Manipulation des Laserstrahls unter Anpassung wenigstens eines der Strahlparameter in Echtzeit während des Betriebs der EUV-Laserplasmaquelle erfolgen.

8. Verfahren nach einem der vorhergehenden Ansprüche, **dadurch gekennzeichnet, dass** die Strahlaufspaltung im Schritt a) unter Verwendung einer strahlaufspaltenden optischen Anordnung (110, 310, 710, 810, 820, 830, 840, 850) erfolgt, welche sphärische Wellenfrontdeformationen des Laserstrahls bewirkt.

9. Verfahren nach Anspruch 8, **dadurch gekennzeichnet, dass** die strahlaufspaltende optische Anordnung (110, 310, 710, 810, 820, 830, 840, 850) wenigstens eine diffraktive Struktur aufweist.

10. Verfahren nach Anspruch 8 oder 9, **dadurch gekennzeichnet, dass** die strahlaufspaltende optische Anordnung (710, 810, 820, 830, 840, 850) einen auf die Anordnung auftreffenden Laserstrahl in Teilstrahlen aufspaltet, wobei die Auftreffpunkte dieser Teilstrahlen auf eine quer zur Lichtausbreitungsrichtung des Laserstrahls verlaufende Ebene eine zweidimensionale, gitterartige Verteilung bilden.

11. Verfahren nach Anspruch 9 oder 10, **dadurch gekennzeichnet, dass** die strahlaufspaltende optische Anordnung (710, 810, 820, 830, 840, 850) wenigstens zwei diffraktive Strukturen aufweist, welche sich in voneinander verschiedenen, insbesondere zueinander senkrechten Richtungen erstrecken.

12. Verfahren nach Anspruch 11, **dadurch gekennzeichnet, dass** diese diffraktiven Strukturen sich in ihrer auf die jeweils erste positive Beugungsordnung bezogenen Brennweite um wenigstens einen Faktor 3, insbesondere um wenigstens einen Faktor 4, weiter insbesondere um wenigstens einen Faktor 5, unterscheiden.

**Claims**

1. Method for beam analysis in an EUV laser plasma source of a microlithographic projection exposure apparatus,

- wherein a plurality of beam parameters of a laser beam, which was generated by a laser light source in the EUV laser plasma source and which propagates along an optical axis (OA), are ascertained for analysing geometric beam parameters and wavefront deviations,
- wherein this plurality of beam parameters comprises at least one of the parameters of beam size, beam decentration, beam inclination, beam divergence, astigmatism, coma, spherical aberration, and wherein the method includes the following steps:

a) splitting the laser beam into a plurality of partial beams, which have a focal offset in the longitudinal direction with respect to the optical axis (OA);
b) recording a measurement image generated by these partial beams, which has spot images corresponding to different focal positions;
c) performing a forward simulation of the laser beam in the EUV laser plasma source on the basis of estimated start values for the beam parameters in order to obtain a simulated image; and
d) calculating a set of values for the beam parameters on the basis of a comparison between the simulated image and the measurement image;
e) performing steps c) and d) iteratively, wherein the respectively calculated values for the beam parameters form the basis of a respective subsequent forward simulation; and
f) outputting output values for the beam parameters ascertained by the iteration in step e).

2. Method according to Claim 1, **characterized in that** the number of varied beam diameters is varied, in particular reduced, within the scope of the iterative performance of steps c) and d).

3. Method according to Claim 1 or 2, **characterized in that**, within the scope of the iterative performance of the steps c) and d), an algorithm applied during this iteration is varied.

4. Method according to any one of the preceding claims, **characterized in that** said method further comprises the step of recording a near field image generated by the laser beam.

5. Method according to Claim 4, **characterized in that** recording of this near field image and recording of a far field image corresponding to the measurement image generated by the partial beams is implemented simultaneously.

6. Method according to any one of the preceding claims, **characterized in that**, on the basis of the output values for the beam parameters, there is manipulation of the laser beam with an adaptation of at least one of the beam parameters.

7. Method according to Claim 6, **characterized in that** the output of the output values and the manipulation of the laser beam with an adaptation of at least one of the beam parameters are implemented in real time during the operation of the EUV laser plasma source.

8. Method according to any one of the preceding claims, **characterized in that** the beam splitting in step a) is implemented using a beam splitting optical arrangement (110, 310, 710, 810, 820, 830, 840, 850), which causes spherical wavefront deformations of the laser beam.

9. Method according to Claim 8, **characterized in that** the beam splitting optical arrangement (110, 310, 710, 810, 820, 830, 840, 850) has at least one diffractive structure.

10. Method according to Claim 8 or 9, **characterized in that** the beam splitting optical arrangement (710, 810, 820, 830, 840, 850) splits a laser beam incident on the arrangement into partial beams, wherein the points of incidence of these partial beams form a two-dimensional, grid-like distribution in a plane extending transversely to the direction of light propagation of the laser beam.

11. Method according to Claim 9 or 10, **characterized in that** the beam splitting optical arrangement (710, 810, 820, 830, 840, 850) has at least two diffractive structures which extend in different directions from one another, more particularly at right angles with respect to one another.

12. Method according to Claim 11, **characterized in that** these diffractive structures differ in terms of their focal length, in each case in relation to the first positive order of diffraction, by at least a factor of 3, in particular by at least a factor of 4, and further particularly at least by a factor of 5.

**Revendications**

1. Procédé d'analyse de faisceau dans une source de plasma laser EUV d'un système d'exposition par projection microlithographique,

   - dans lequel une pluralité de paramètres d'un faisceau laser généré par une source de lumière laser dans la source de plasma laser EUV et se propageant le long d'un axe optique (OA) sont déterminés pour analyser des paramètres géométriques du faisceau et des écarts du front d'onde,
   - dans lequel ladite pluralité de paramètres de faisceau comprennent au moins l'un des paramètres parmi la taille du faisceau, le décentrement du faisceau, l'inclinaison du faisceau, la divergence du faisceau, l'astigmatisme, la coma, l'aberration sphérique, et
   dans lequel le procédé comprend les étapes suivantes :

   a) division du faisceau laser en une pluralité de faisceaux partiels qui présentent un décalage focal par rapport à l'axe optique (OA) orienté dans la direction longitudinale ;
   b) acquisition d'une image de mesure générée au moyen desdits faisceaux partiels, laquelle comporte des images ponctuelles correspondant à différentes positions de mise au point ;
   c) exécution d'une simulation en sens direct du faisceau laser dans la source de plasma laser EUV sur la base de valeurs initiales estimées pour les paramètres de faisceau afin d'obtenir une image simulée ; et
   d) calcul d'un ensemble de valeurs pour les paramètres de faisceau sur la base d'une comparaison entre l'image simulée et l'image de mesure ;
   e) exécution itérative des étapes c) et d), dans lequel les valeurs respectivement calculées pour les paramètres de faisceau sont utilisées comme base d'une simulation en sens direct ultérieure respective ; et
   f) fourniture en sortie de valeurs de sortie pour les paramètres de faisceau déterminés par l'itération de l'étape e).

2. Procédé selon la revendication 1, **caractérisé en ce que**, pendant l'exécution itérative des étapes c) et d), le nombre de paramètres de faisceau amenés à varier est modifié, en particulier réduit.

3. Procédé selon la revendication 1 ou 2, **caractérisé en ce que**, lors de l'exécution itérative des étapes c) et d), un algorithme utilisé lors de ladite itération est amené à varier.

4. Procédé selon l'une des revendications précédentes, **caractérisé en ce qu'**il comprend en outre l'étape d'acquisition d'une image en champ proche générée par le faisceau laser.

5. Procédé selon la revendication 4, **caractérisé en ce que** l'acquisition de ladite image en champ proche et l'acquisition d'une image en champ lointain correspondant à l'image de mesure générée par les faisceaux partiels sont effectuées simultanément.

6. Procédé selon l'une des revendications précédentes, **caractérisé en ce que**, sur la base des valeurs de sortie des paramètres de faisceau, une manipulation du faisceau laser est effectuée par ajustement d'au moins l'un des paramètres de faisceau.

7. Procédé selon la revendication 6, **caractérisé en ce que** la fourniture en sortie des valeurs de sortie et la manipulation du faisceau laser par ajustement d'au moins l'un des paramètres de faisceau sont effectuées en temps réel pendant le fonctionnement de la source de plasma laser EUV.

8. Procédé selon l'une des revendications précédentes, **caractérisé en ce que** la division du faisceau à l'étape a) est effectuée par utilisation d'un dispositif optique de division de faisceau (110, 310, 710, 810, 820, 830, 840, 850) qui provoque des déformations sphériques du front d'onde du faisceau laser.

9. Procédé selon la revendication 8, **caractérisé en ce que** le dispositif optique de division de faisceau (110, 310, 710, 810, 820, 830, 840, 850) comporte au moins une structure diffractante.

10. Procédé selon la revendication 8 ou 9, **caractérisé en ce que** le dispositif optique de division de faisceau (710, 810, 820, 830, 840, 850) divise un faisceau laser incident sur le dispositif en des faisceaux partiels, dans lequel les points d'incidence desdits faisceaux partiels sur un plan s'étendant transversalement à la direction de propagation de la lumière du faisceau laser forment une distribution bidimensionnelle en forme de grille.

**11.** Procédé selon la revendication 9 ou 10, **caractérisé en ce que** le dispositif optique de division de faisceau (710, 810, 820, 830, 840, 850) comporte au moins deux structures diffractantes qui s'étendent dans des directions mutuellement différentes, en particulier des directions mutuellement perpendiculaires.

**12.** Procédé selon la revendication 11, **caractérisé en ce que** lesdites structures diffractantes diffèrent par leur distance focale par rapport au premier ordre de diffraction positif respectif d'au moins un facteur 3, en particulier d'au moins un facteur 4, et plus particulièrement d'au moins un facteur 5.

**Fig. 1**

## Fig. 2a

$$f_r = f_0$$

$$f_d = \frac{f_1}{k} \, , \quad k = 0, \pm 1, \pm 2, \ldots$$

112      111      110

## Fig. 2b

$f_0 = 200$ , $f_1 = 2000$

komb. Brennweite

Beugungsordnung

EP 3 359 928 B1

**Fig. 3**

EP 3 359 928 B1

# Fig. 4

S410 Schätzung der Parameter $a_1$ $a_2$ $a_n$

S420 Bildsimulation / Simulation der Optik

S430 Simulierte Intensitätsbilder

S460 Aktualisierung der Parameter

S450 Vergleich

S440 Gemessene Intenstitätsbilder

EP 3 359 928 B1

Fig. 5

Fig. 6

a)

b)

**Fig. 7**

**Fig. 8**

a) 810 · 811 · 813 · 815

b) 820 · 823 · 821 · 815

c) 830 · 831 · 832 · 815

d) 840 · 841 · 843 · 815

e) 850 · 851 · 815

EP 3 359 928 B1

# Fig. 9

EP 3 359 928 B1

## Fig. 10

# Fig. 11

a)

b)

c)

## Fig. 12

EP 3 359 928 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015219330

- WO 2015113713 A1